Europäisches Patentamt

European Patent Office

Office européen des brevets

(19)

(11) **EP 0 917 799 B1**

(12) **FASCICULE DE BREVET EUROPEEN**

(45) Date de publication et mention
de la délivrance du brevet:
**28.08.2002   Bulletin 2002/35**

(51) Int Cl.⁷: **H04N 3/15**, G01C 11/02

(21) Numéro de dépôt: **98925699.5**

(22) Date de dépôt: **12.05.1998**

(86) Numéro de dépôt international:
**PCT/FR98/00942**

(87) Numéro de publication internationale:
**WO 98/052348 (19.11.1998 Gazette 1998/46)**

(54) **PROCEDE POUR L'ACQUISITION D'UNE IMAGE PAR BALAYAGE POUSSE-BALAI SURECHANTILLONNE**

BILDERFASSUNGSVERFAHREN MIT PUSH-BROOM-ÜBERABTASTUNG

METHOD FOR ACQUIRING AN IMAGE BY OVERSAMPLED PUSH-BROOM SCANNING

(84) Etats contractants désignés:
**AT BE CH CY DE DK ES FI FR GB GR IE IT LI LU MC NL PT SE**

(30) Priorité: **12.05.1997  FR 9705766**

(43) Date de publication de la demande:
**26.05.1999   Bulletin 1999/21**

(73) Titulaire: **CENTRE NATIONAL D'ETUDES SPATIALES**
**75001 Paris (FR)**

(72) Inventeurs:
• **DUCHON, Paul**
 **F-31810 Venerque (FR)**
• **DE LEFFE, Alain**
 **F-31000 Toulouse (FR)**
• **PIRCHER, Marc**
 **F-31450 Odars (FR)**

(74) Mandataire: **Schrimpf, Robert et al**
**Cabinet Regimbeau**
**20, rue de Chazelles**
**75847 Paris cedex 17 (FR)**

(56) Documents cités:
**EP-A- 0 027 168**        **EP-A- 0 383 114**
**EP-A- 0 510 269**        **FR-A- 2 595 817**
**FR-A- 2 737 376**

## Description

La présente invention est relative à un procédé d'acquisition d'une image par balayage "pousse-balai" (push-broom selon la terminologie anglo-saxonne généralement utilisée) à partir d'au moins une barrette de capteurs du type à transfert de charge CCD défilant au droit de la zone observée.

L'invention trouve avantageusement application pour l'observation satellitaire de la terre ou encore pour l'observation à partir de véhicules aériens (avion, drône, etc).

Il a déjà été proposé par le Demandeur, dans sa demande de brevet FR 95 09263 (FR-A-2 737 376), un procédé d'acquisition d'images aux moyens de barrettes ou matrices de capteurs CCD selon lequel on oriente la barrette ou la matrice par rapport à la direction de déplacement de façon à réaliser un suréchantillonnage tout en atténuant les effets du repliement de spectre.

Un but de l'invention est de proposer une acquisition qui permette d'accéder à des échantillonnages d'une plus grande finesse.

A cet effet, elle propose un procédé pour l'acquisition d'une image par balayage pousse-balai à partir d'un véhicule satellitaire ou aérien portant au moins une barrette de capteurs de type à transfert de charge, caractérisé en ce qu'on commande l'attitude et les vitesses angulaires de roulis, tangage et lacet du véhicule pour que les vitesses longitudinale et latérale au sol de la barrette vérifient

$$V_{Longi} = \pm \frac{m}{m^2 + \ell^2} \cdot V_{ref}$$

$$V_{latérale} = \pm \frac{\ell}{m^2 + \ell^2} \cdot V_{ref}$$

où $V_{ref}$ = P/Ti, P étant le pas au sol de la barrette, Ti la période d'échantillonnage, m et $\ell$ deux entiers.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique de l'image au sol d'une barrette de détecteurs CCD se déplaçant par rapport à un repère lié à la terre, sur laquelle on a porté les angles de roulis, de tangage et de lacet du véhicule qui transporte ladite barrette ;
- la figure 2 est une représentation schématique illustrant un échantillonnage obtenu avec une barrette dont l'angle entre la normale à ladite barrette et la vitesse au sol du centre de l'image de ladite barrette est de $\alpha$n ;
- les figures 3 et 4 sont des représentations par schéma bloc des moyens de dispositif conformes à deux modes de réalisation particuliers de l'invention permettant des acquisitions de type de celle illustrée sur la figure 2 ;
- la figure 5 représente schématiquement une disposition de barrette avantageuse pour la mise en oeuvre de l'invention ;
- la figure 6 illustre un mode de réalisation possible avec une telle disposition.

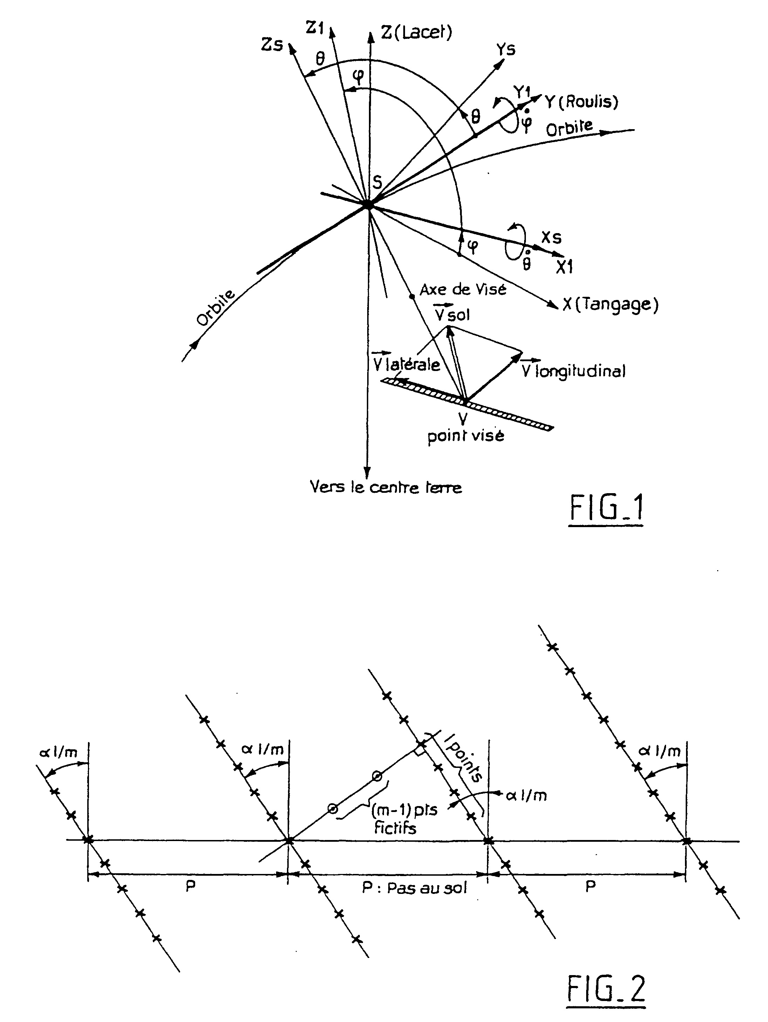

Sur la figure 1, on a désigné par S le satellite porteur de la barrette d'acquisition, par X, Y, Z le repère orbital local dont le centre S est confondu avec le centre de masse du satellite, par Vsat et Vsol les vecteurs correspondant à la vitesse absolue du point de visée de la barrette et à la vitesse relative de cette image de la barrette par rapport au sol.

Dans cet exemple, la (ou les) barrette(s) d'acquisition sont disposées de façon classique au plan focal d'une optique, avec ou sans miroir de changement de visée (si l'instrument possède un miroir de changement de visée, celui-ci sera fixe au moment de la prise de vue ; si tout l'instrument est susceptible de tourner au moment de la prise de vue par rapport au satellite, cet instrument restera fixe au moment de la prise de vue).

Les angles de roulis, tangage et lacet ont respectivement été référencés par $\varphi$, $\theta$ et $\psi$ ; les vitesses angulaires correspondantes par $\dot{\varphi}$, $\dot{\theta}$ et $\dot{\psi}$.

Dans la plupart des satellites d'observation de la terre, le corps du véhicule est calé sur le repère orbital local. Un système de miroirs permet d'orienter l'axe de visée de façon à accéder au maximum de zones possibles.

La vitesse $\vec{V}$sol est la différence entre la vitesse $\vec{V}$sat et la vitesse $\vec{V}$terre d'entraînement due à la rotation terrestre ( $\vec{\Omega}_{terre} \wedge C\vec{V}$ avec C centre terre).

Plus particulièrement,

$$\vec{V}sol = \vec{V}sat - \vec{V}terre + \vec{\Omega} \wedge S\vec{V}$$

où $\vec{V}$ désigne le point de visée sur la terre et $\vec{\Omega}$ la vitesse angulaire absolue du satellite S en supposant l'axe de visée lié et fixé au satellite.

Selon l'invention, les vitesses angulaires de roulis, de tangage et de lacet du satellite sont commandées de façon à réaliser un échantillonnage du type de celui illustré sur la figure 2, dans le cas d'un angle de glissement au sol de la barrette tel que :

$$\alpha_{\ell im} = \text{Arctg } \ell/m,$$

les vitesses longitudinales et latérales au sol de la barrette étant données par :

$$V_{Longi} = \pm \frac{m}{m^2 + \ell^2} \cdot V_{ref}$$

avec $V_{ref} = P/T_i$

$$V_{latérale} = \pm \frac{\ell}{m^2 + \ell^2} \cdot V_{ref}$$

où P est le pas au sol de la barrette, $T_i$ la période d'échantillonnage et m et $\ell$ des entiers. Sur la figure 2, les croix représentent les images au sol des centres des détecteurs à chaque instant d'échantillonnage $t + kT_i$, avec k entier, t un instant d'échantillonnage donné.

Notamment, si m = 1 et $\ell$ = n, avec n entier, on obtient un échantillonnage dit "supermode entier" avec des images au sol des centres de détecteurs répartis sur une grille orthonormée. Un tel échantillonnage présente l'avantage d'être d'un pas au sol et d'un effet de filé réduit.

A titre d'exemple, on donne dans le tableau ci-après les caractéristiques de plusieurs échantillonnages "supermode entier" possibles.

TABLEAU

| Super-mode n° (n) | "Pas" au sol effectif Pn | Angle $\alpha n$ | Vitesse au sol | | Champ de vue sous la trace Cn* |
|---|---|---|---|---|---|
| | | | Longitudinale | Latérale | |
| 1 | $P/\sqrt{2}$ | Arctg1=45° | ±Vréf/2 | ±Vréf/2 | 42,4 km |
| 2 | $P/\sqrt{5}$ | Arctg2=63°, 435 | ±Vréf/5 | ±2Vréf/5 | 26,8 km |
| 3 | $P/\sqrt{10}$ | Arctg3=71°, 565 | ±Vréf/10 | ±3Vréf/10 | 18,9 km |
| 4 | $P/\sqrt{17}$ | Arctg4=75°, 964 | ±Vréf/17 | ±4Vréf/17 | 14,5 km |
| ... | ... | ... | ... | ... | ... |
| N | $P/\sqrt{n^2+1}$ | Arctg(n) | ±Vréf/$n^2$+1 | ±nVréf/ $n^2$+1 | Ccos$\alpha$n |

\* Pour un champ de 60 km en mode de prise de vue normale

sous trace (SPOT 1, 2, 3 et 4).

Lorsque l'on ne se trouve pas dans le cas d'un échantillonnage de type supermode entier, on parle alors d'échantillonnage "supermode fractionnaire".

Ce type d'échantillonnage présente de nombreux avantages.

Il permet de ne pas utiliser de barrettes doubles, qui sont d'une technologie spécifique au besoin d'observation de la terre par satellite. Il est de ce fait moins onéreux.

Egalement, il est d'une grande souplesse d'utilisation. Notamment, il permet pour un satellite et un instrument d'observation optique donné (figé et/ou déjà en orbite) de pouvoir programmer des prises de vues donnant une résolution de l'image améliorée (après un traitement approprié).

Egalement, il permet aussi de pouvoir programmer des "bandes de prises d'images" en biais par rapport à la trace suborbitale du satellite (ou la trace au sol direct de l'avion ou du drône) ce qui peut avoir un intérêt pour prendre quasi-simultanément des images fortement décalées en latéral.

Globalement, ces "supermodes" permettent d'augmenter les performances en résolution et en accès d'un satellite d'observation de la terre existant ou en développement ; ils fournissent des possibilités supplémentaires et de la souplesse au système.

Par exemple, sur le satellite SPOT1 en orbite depuis février 1986, dont la résolution est de 10 m x 10 m, il est possible avec la solution proposée par l'invention de réaliser des acquisitions avec des pas au sol de 4,5 m x 2,25 m (avec $\ell$ = 4 et m = 2) voir 2,4 m x 2,4 m (avec $\ell$ = 4 et m = 1).

A titre d'exemple, les vitesses angulaires de roulis et de tangage ($\varphi$ et $\theta$) peuvent être élaborées avec une contrainte imposant un angle de lacet nul ($\psi$= 0) en étant calculées à partir des vitesses $\vec{V}_{Longi}$ et $\vec{V}_{latérale}$ correspondant à l'échantillonnage souhaité.

En variante, un angle de glissement différent de la valeur correspondant au supermode réalisé à lacet nul peut être obtenu avec une rotation de lacet.

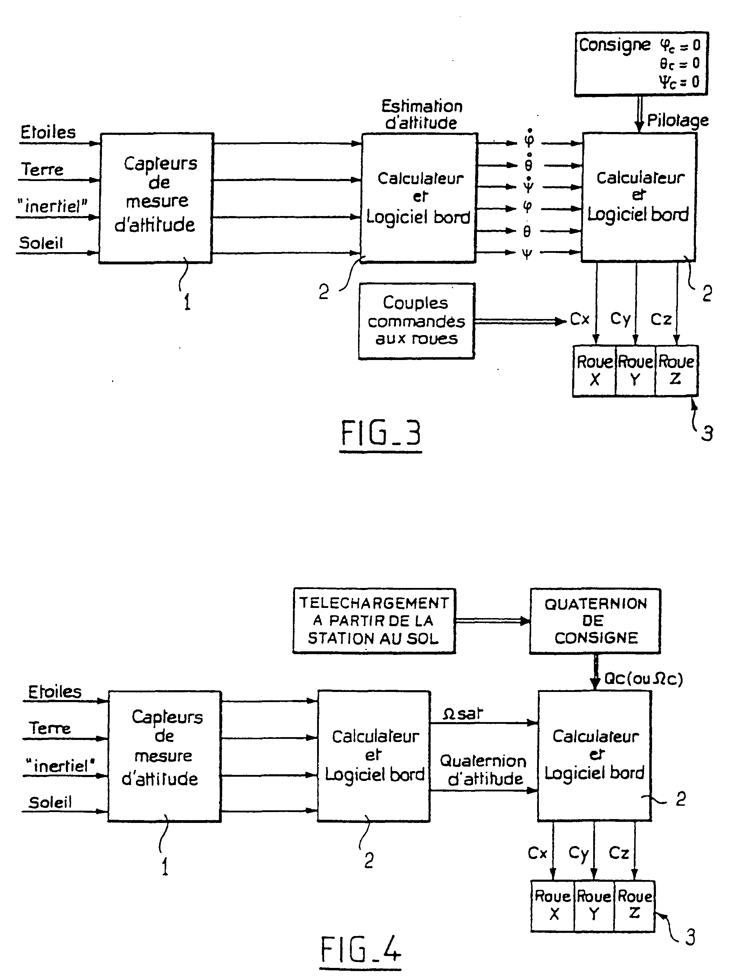

A titre d'exemple, dans le cas d'un satellite à pointage géocentrique, on peut utiliser pour réaliser un échantillonnage à angle de lacet nul des moyens du type de ceux illustrés sur la figure 3.

Ces moyens comportent des moyens 1 de mesure d'attitude constitués par exemple de senseurs stellaires, senseurs terrestres, de gyroscopes ou de senseurs solaires.

Ils utilisent également le calculateur de bord 2 du satellite qui en fonction des mesures réalisées par les moyens précités, réalise une estimation de l'attitude du satellite et détermine les valeurs réelles des angles et vitesses angulaires de tangage, lacet et roulis.

En imposant des valeurs de consigne, par exemple sur les angles d'attitude et/ou les vitesses angulaires, le calculateur de bord élabore des commandes destinées à être appliquées aux actionneurs d'attitude 3.

Les actionneurs 3 sont des roues de réaction auxquelles on impose des couples $C_x$, $C_y$ et $C_z$, ces roues correspondant aux trois axes du satellite. Ces roues doivent être désatinées en continu ou régulièrement par des magnétocoupleurs.

La figure 4 illustre le cas général de la commande d'un satellite manoeuvrant.

Des consignes d'attitude sous forme de quaternion de guidage ou vitesse angulaire absolue de guidage du satellite sont calculées au sol à partir de consignes d'attitudes ou de vitesses ($\varphi$c, $\theta$c, $\psi$c, $\varphi$c, $\theta$c et $\psi$c) calculées par le segment sol pour réaliser les échantillonnages souhaités. Le contrôle d'attitude exécute donc ces consignes après téléchargement sur le satellite des "profils d'attitude" sous forme de quaternions fonction du temps ou consigne de vitesse angulaire absolue du satellite fonction du temps (ce sont en général des polynomes fonction du temps).

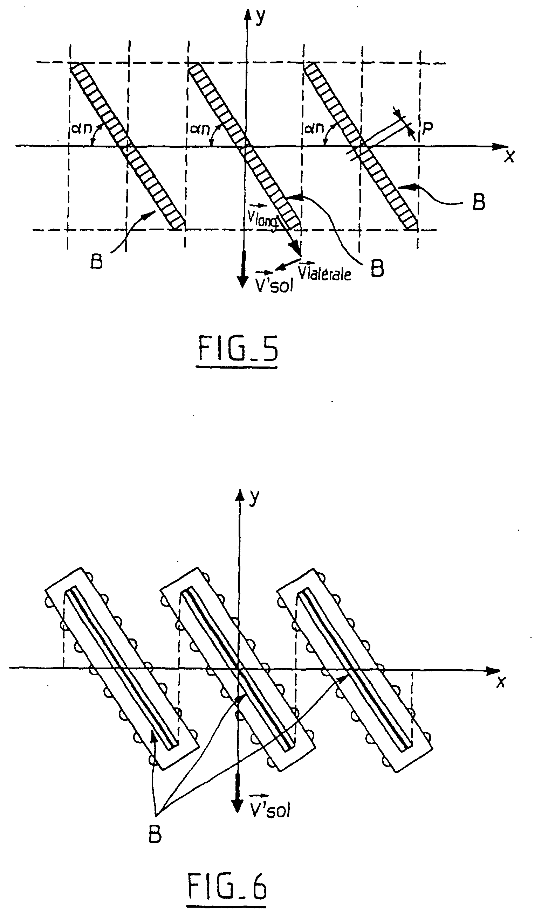

On a illustré sur la figure 5 une disposition de barrettes permettant une mise en oeuvre avantageuse de l'invention.

Selon cette disposition, une pluralité de barrettes B de type à transfert de charge est répartie en dents de scie au plan focal de l'instrument d'observation de la terre. Ces différentes barrettes B sont identiques et parallèles et réparties en ligne dans ledit plan focal.

Le satellite est guidé en attitude de façon que l'inclinaison des barrettes par rapport à la normale à la vitesse du satellite au sol soit égale à :

$$\alpha_{\ell/m} = \text{Arctg } \ell/m$$

la vitesse au sol vérifiant les formules données en page 3 (voir figure 5), $V_{longi}$ et $V_{latérale}$ étant parallèles et perpendiculaires à la direction des barrettes B.

Une telle disposition permet de n'avoir à mettre en oeuvre qu'un contrôle en tangage de l'attitude du satellite, ainsi qu'éventuellement un faible contrôle en roulis pour compenser l'effet de rotation de la terre.

L'acquisition réalisée est donc moins coûteuse que celle décrite en référence aux figures précédentes.

On notera par ailleurs que cette disposition permet une plus grande efficacité d'acquisition. En particulier, à nombre de détecteurs élémentaires égal, il est possible avec une pluralité de barrettes parallèles d'accéder à des images de zones rectangulaires au sol plus grandes qu'avec une seule barrette de détecteurs.

Par ailleurs, on notera, comme cela a été illustré sur la figure 6, que cette technique permet d'utiliser, pour la réalisation des barrettes, des barrettes de type à circuit intégré, c'est-à-dire des puces électroniques, technologie qu'il n'est pas possible d'utiliser dans le cas où l'on doit disposer au plan focal une barrette d'un seul tenant (sans optique particulière, type DIVOLI par exemple).

**Revendications**

1. Procédé pour l'acquisition d'une image par balayage pousse-balai à partir d'un véhicule satellitaire ou aérien portant au moins une barrette de capteurs de type à transfert de charge, **caractérisé en ce que** l'on commande l'attitude et les vitesses angulaires de roulis, tangage et lacet du véhicule pour que les vitesses longitudinale et latérale au sol de la barrette vérifient

$$V_{Longi} = \pm \frac{m}{m^2 + \ell^2} \cdot V_{ref}$$

$$V_{latérale} = \pm \frac{\ell}{m^2 + \ell^2} \cdot V_{ref}$$

où $V_{ref}$ = P/Ti, P étant le pas au sol de la barrette, Ti la période d'échantillonnage, m et $\ell$ deux entiers.

2. Procédé selon la revendication 1, **caractérisé en ce qu'**on commande l'attitude du véhicule en imposant un angle de lacet constant.

3. Procédé selon la revendication 1, **caractérisé en ce qu'**on commande l'attitude du véhicule en faisant varier l'angle tangage et l'angle de lacet.

4. Procédé selon la revendication 1, **caractérisé en ce que** le véhicule comporte une pluralité de barrettes disposées parallèlement en dents de scie dans le plan focal d'une optique, le véhicule étant guidé de façon que l'inclinaison des barrettes par rapport à la normale à la vitesse du satellite au sol soit égale à :

$$\alpha_{\ell/m} = Arctg\ \ell/m.$$

**Claims**

1. Process for acquiring an image by push-broom scanning from a satellite or aerial vehicle carrying at least one array of sensors of charge coupled type, **characterized in that** the attitude and the angular rates of roll, pitch and yaw of the vehicle are controlled so that the longitudinal and lateral ground speeds of the array satisfy

$$V_{Longi} = \pm \frac{m}{m^2 + l^2} \cdot V_{ref}$$

$$V_{lateral} = \pm \frac{l}{m^2 + l^2} \cdot V_{ref}$$

where $V_{ref}$ = P/Ti, P being the footprint of the array, Ti the sampling period, m and l two integers.

2. Process according to Claim 1, **characterized in that** the attitude of the vehicle is controlled by imposing a constant angle of yaw.

3. Process according to Claim 1, **characterized in that** the attitude of the vehicle is controlled by varying the pitch angle and the angle of yaw.

4. Process according to Claim 1, **characterized in that** the vehicle comprises a plurality of arrays arranged in parallel in a saw toothed pattern in the focal plane of an optic, the vehicle being guided in such a way that the inclination of the arrays with respect to the normal to the velocity of the satellite on the ground is equal to:

$$\alpha_{l/m} = \text{Arctan } l/m.$$

**Patentansprüche**

1. Verfahren zum Erfassen eines Bildes mit push-broom-Überabtastung von einem Satelliten oder Flugzeug mit wenigstens einer Anordnung von Ladungstransfersensoren,
   **dadurch gekennzeichnet, dass**
   die Stellung und die Winkelgeschwindigkeiten des Fahrzeugs beim Rollen, Nicken und Gieren so gewählt werden, dass die Längsgeschwindigkeit und Quergeschwindigkeit der Anordnung am Boden beschrieben werden durch

$$V_{langs} = \pm \frac{m}{m^2 + l^2} \cdot V_{ref}$$

und

$$V_{quer} = \pm \frac{l}{m^2 + l^2} \cdot V_{ref},$$

wobei $V_{ref} = {}^P/_{Ti}$, $P$ die Schrittweite der Anordnung am Boden, $Ti$ das Abtastintervall und $m$ und $l$ ganze Zahlen sind.

2. Verfahren nach Anspruch 1,
   **dadurch gekennzeichnet, dass**
   die Stellung des Fahrzeugs eingestellt wird, indem ein konstanter Gierwinkel eingestellt wird.

3. Verfahren nach Anspruch 1,
   **dadurch gekennzeichnet, dass**
   die Stellung des Fahrzeugs eingestellt wird, indem der Nickwinkel und Rollwinkel verändert wird.

4. Verfahren nach Anspruch 1,
   **dadurch gekennzeichnet, dass**
   das Fahrzeug mehrere parallele, sägezahnförmige Anordnungen in der Brennebene einer Optik aufweist, wobei das Fahrzeug derart gesteuert wird, dass die Neigung der Anordnungen in Bezug auf die Normale zu der Geschwindigkeit des Satelliten gegenüber dem Boden gegeben ist durch

$$\alpha_{l/m} = \arctan(l/m).$$

FIG.1

FIG.2

FIG_3

FIG_4

FIG_5

FIG_6